# EUROPÄISCHE PATENTSCHRIFT

(11) **EP 3 033 531 B1**
(45) Veröffentlichungstag und Bekanntmachung des Hinweises auf die Patenterteilung: **13.11.2019**
(21) Anmeldenummer: 14747839.0
(22) Anmeldetag: 30.07.2014
(51) Int. Cl.: B66C 13/20, E02F 3/42, E02F 9/22, F16F 9/22, F16F 9/46, F15B 15/14, F15B 21/14, F16F 9/02

(54) **SYSTEM ZUR AUTOMATISCHEN ANPASSUNG EINER VORGEBBAREN GASEINTRAGSMENGE UND BETÄTIGUNGSEINRICHTUNG MIT EINEM SOLCHEN SYSTEM**
SYSTEM FOR AUTOMATICALLY ADJUSTING A PREDETERMINABLE GAS INPUT VOLUME AND AN ACTUATION DEVICE WITH SUCH A SYSTEM
SYSTÈME D'AJUSTEMENT AUTOMATIQUE UN VOLUME DE GAZ PRÉDÉTERMINABLE ET UN DISPOSITIF D'ENTRAINEMENT AVEC UN TEL SYSTEME

(30) Priorität: 16.08.2013 DE 102013013690
(43) Veröffentlichungstag der Anmeldung: 22.06.2016
(73) Patentinhaber: Hydac Technology GmbH, 66280 Sulzbach/Saar (DE)
(72) Erfinder: BAUER, Frank, 66646 Marpingen (DE); FELD, Daniel, 66271 Kleinblittersdorf (DE)
(74) Vertreter: Bartels und Partner, Patentanwälte
(86) Internationale Anmeldenummer: PCT/EP2014/002088
(87) Internationale Veröffentlichungsnummer: WO 2015/022054

(56) Entgegenhaltungen:
- EP-A1- 0 897 480
- EP-A1- 2 455 552
- WO-A1-01/59309
- DE-A1-102011 119 011
- GB-A- 2 000 227
- US-A- 3 353 352

## Beschreibung

Die Erfindung betrifft ein System zur automatischen Anpassung einer vorgebbaren Gaseintragsmenge in einem Arbeitssystem mit relativ zueinander bewegbaren Systemkomponenten mit den Merkmalen im Oberbegriff von Anspruch 1. Die Erfindung betrifft ferner eine Betätigungseinrichtung für eine hydraulisch betätigbare Arbeitsgerätschaft, wie einen an einer Armaufnahme vorzugsweise schwenkbar gelagerten Lasthebearm mit einem solchen System.

Derartige Systeme sind unter anderem bei Arbeitsgerätschaften von Arbeitsmaschinen, wie beispielsweise Materialumschlagmaschinen, Multihandlern, Multiloadern, Teleskopkranen oder dergleichen mehr, einsetzbar. Diese Arbeitsgerätschaften weisen regelmäßig einen schwenkbar an einer Armaufnahme gelagerten oder angelenkten Lasthebearm auf, die beide Bestandteile eines Oberwagens sind, der wiederum um eine Hochachse schwenkbar mit einem Unterwagen verbunden ist, der dem Verfahren der Arbeitsmaschine dient und insoweit deren Fahrantrieb aufweist. Weitere mögliche Arbeitsgerätschaften sind vertikal ausfahrbare Lasthebearme von Lasthebeeinrichtungen, wie sie bei Staplern, insbesondere Gabelstaplern, verwendet werden. Die Betätigung des jeweiligen Lasthebearms erfolgt über Aktuatoren in Form von hydraulisch betätigbaren Kolbenstangen-Zylinder-Einheiten, bei deren Ausfahren sich der Lasthebearm anhebt und bei deren Einfahren sich dieser wieder absenkt. Hierbei muss unter relativ hohem Energieeinsatz beim Anheben der jeweiligen Arbeitsgerätschaft Hydraulikflüssigkeit in die Aktuatoren eingespeist werden, die bei deren Absenken ungenutzt verbraucht, insbesondere in Verlustwärme umgewandelt wird.

Um bei diesem energieintensiven Betrieb der Arbeitsgerätschaft durch Einsatz der hydraulischen Arbeitszylinder (Aktuatoren) Einsparungen erzielen zu können, sind im Stand der Technik (z.B. EP 0 897 480 B1) bereits eine Vielzahl sogenannter Energierückgewinnungsvorrichtungen vorgeschlagen worden, bei denen vorgesehen ist, beim Senken der Arbeitsgerätschaft die kolbenseitige Fluidmenge des jeweiligen Arbeitszylinders (Aktuators) unter Einbeziehen der dadurch abgegebenen Lageenergie, also unter Druck, an mindestens einen, fachsprachlich auch als Rekuperator bezeichneten Hydrospeicher, insbesondere in Form eines Kolbenspeichers, abzugeben, um die dann derart in dem jeweiligen Hydrospeicher bevorratete Energie von dort vorzugsweise mittels einer Steuereinrichtung genau quantifizierbar für den später folgenden Hebevorgang der Arbeitsgerätschaft im Bedarfsfall wieder abzurufen. Dergestalt wird eine Rückgewinnung von in den Hydrospeicher (Rekuperator) eingebrachter Energie in den jeweiligen Aktuator erreicht. Eine vergleichbare Energierückgewinnungs- oder Rekuperatorlösung ist bei Staplern durch die DE 10 2005 052 108 A1 aufgezeigt.

Die über die Aktuatoren jeweils in den Rekuperator eingebrachte Fluid- oder Hydraulikmenge wird gegen eine im Speicher über ein Trennelement, wie einer Trennmembran oder einem Trennkolben, separierte Gasmenge vorgespannt, die beim Abrufen der gespeicherten Fluidmenge aus dem Hydrospeicher (Rekuperator) sich entspannend den gespeicherten Gasdruck wieder an den hydraulischen Fluidkreis abgibt. Es hat sich jedoch in der Praxis gezeigt, dass für eine effiziente Energierückgewinnung eine Vielzahl von Hydrospeichern und/oder von Hydrospeichern mit entsprechend großem Speichervolumen notwendig sind, die auf der Arbeitsmaschine viel Einbauraum benötigen, der so regelmäßig nicht zur Verfügung steht. Im Übrigen erhöhen diese Speicher auch das zu bewegende Einsatzgewicht der Arbeitsmaschine.

Während bei den vorstehend beschriebenen Lösungen der jeweilige Aktuator fluidführend mit dem zuordenbaren Rekuperator verbunden ist, sind im Stand der Technik auch Lösungen aufgezeigt, bei denen eine solche fluidführende Verbindung nicht besteht.

So ist in der DE 10 2010 032 415 A1, insbesondere in deren Fig. 2, eine Vorrichtung zur Rückgewinnung von Energie bei Arbeitsmaschinen mit mindestens einem Kraftantrieb oder Aktuator aufgezeigt, der zum Bewegen einer Lastmasse im Hin- und Hergang betätigbar ist, und einen hierzu parallel angeordneten, jedoch fluidisch getrennten Energiespeicher oder Rekuperator aufweist, der beim Bewegen der Lastmasse in der einen Richtung abgegebene Energie aufnimmt und für eine nachfolgende Bewegung in der anderen Richtung wieder abrufbar zur Verfügung stellt. Hierbei ist als Rekuperator ein Energiespeicher in Form eines Speicherzylinders vorgesehen, der, mit der Lastmasse mechanisch gekoppelt, bei Bewegung in der einen Richtung pneumatische Druckenergie speichert und bei Bewegung in der anderen Richtung als den Kraftantrieb oder Aktuator unterstützender, die gespeicherte Druckenergie in Antriebskraft umsetzender Hilfs-Arbeitszylinder wirkt.

Es hat sich in der Praxis gezeigt, dass mit den vorstehend beschriebenen Lösungen sich bereits erhebliche Energieeinsparungen beim Betrieb der jeweiligen Arbeitsgerätschaft, respektive Arbeitsmaschine, erreichen lassen. Es hat sich jedoch ferner gezeigt, dass die Temperatur des Arbeitsgases in der zuordenbaren Medienkammer des Speicherzylinders oder Rekuperators einen großen Einfluss auf dessen Funktion hat und damit letztendlich auch auf die Gesamtfunktion der Arbeitsgerätschaft einer Arbeitsmaschine. Insbesondere hat es sich gezeigt, dass unter dem Einfluss der Temperatur des Arbeitsgases im Rekuperator sich in unerwünschter Weise dessen jeweils vorgebbare Kraft-Weg-Kennlinie verändert, die an sich für jeden Arbeitspunkt der Arbeitsgerätschaft möglichst konstant gehalten werden soll, um einen energieoptimierten Betrieb sicherstellen zu können. So soll bei vorgegebenem Kennlinienfeld eine mit einem Rekuperator ausgerüstete hydraulische Arbeitsgerätschaft geographisch gesehen sowohl im hohen Norden bei tiefen Temperaturen (deutlich unter dem Gefrierpunkt) ebenso verlässlich mit den gleichen Parametern arbeiten als dies der Fall wäre, wenn dieselbe Arbeitsmaschine mit Arbeitsgerätschaft im Süden bei sehr hohen Außentemperaturen (40 °C und mehr) betrieben wird.

Ferner hat es sich gezeigt, dass im Betrieb der Arbeitsgerätschaft sich jedenfalls das Arbeitsgas in der zuordenbaren Medienkammer des Speicherzylinders oder Rekuperators entsprechend aufheizen kann, was wiederum zu sehr hohen Temperaturen und unerwünschten Änderungen des vorgebbaren Kraft-Weg-Kennlinienfeldes führt.

In der EP 2 455 554 A2 ist bereits bei einer gattungsgemäßen Arbeitsgerätschaft vorgeschlagen worden, die mit Arbeitsgas befüllte Kammer eines Energierückgewinnungszylinders oder Rekuperators mit einem Druckspeicher in direkte Wirkverbindung zu bringen, welcher einem Druckanstieg in der mit Gas befüllten Kammer ab einem vorgebbaren Maximaldruck entgegenwirkt. Hierfür wird bei der bekannten Lösung der Druckspeicher permanent an die mit Arbeitsgas befüllte Medienkammer des Energierückgewinnungszylinders medienführend angeschlossen. Sofern bei der bekannten Lösung jedoch ausgeführt ist, dass der Druckspeicher einen vorbestimmten Betriebsdruck aufzuweisen hat, welcher den Maximaldruck definiert und demgemäß davon ausgegangen werden muss, dass der Druckspeicher unterhalb des Maximaldruckes keinen Einfluss auf den Druck in der mit Gas befüllten Kammer des Energierückgewinnungszylinders oder Rekuperators hat, übersieht die bekannte Lösung die Bedeutung dieses Bereiches unterhalb des Maximaldrucks, der gerade für das verlässliche Einhalten eines vorgebbaren Kraft-Weg-Kennlinienfeldes für den Energierückgewinnungszylinders oder Rekuperators eminente Bedeutung hat.

Die WO 97/42417 A1 beschreibt ein System zur automatischen Anpassung einer vorgebbaren Gaseintragsmenge in einem Arbeitssystem mit relativ zueinander bewegbaren Systemkomponenten, bei denen im Betrieb durch Kompression oder Expansion und/oder bei sich ändernden Betriebs- und Umgebungstemperaturen der Druck der Gaseintragsmenge veränderbar ist, wobei ein Speichersystem mit einem vorgebbaren Speichervolumen über eine Steuereinrichtung derart an das Arbeitssystem anschließbar ist, dass im Fall einer Kompression innerhalb des Arbeitssystems ein Teil der Gaseintragsmenge an das Speichersystem als Speichermenge abgebbar ist und im Fall einer Expansion innerhalb des Arbeitssystems von dem Speichersystem abrufbar als Gaseintragsmenge dem Arbeitssystem wieder zuführbar ist, insbesondere zum Ausgleich von Veränderungen der Temperatur im Arbeitssystem und/oder in dessen Umgebung dient.

Weitere Systeme, die sich mit der Rekuperation von Bewegungsenergie befassen, gehen aus der US 3 353 352, der EP 2 455 552 A1, der GB 2 000 227 A, der WO 01/59309 A1 und der WO 01/59309 A1 hervor.

Vor diesem Hintergrund ist es die Aufgabe der Erfindung, ein System zur automatischen Anpassung einer vorgebbaren Gaseintragsmenge in einem Arbeitssystem unter Einsatz mindestens eines Energierückgewinnungszylinders oder sonstigen Rekuperators aufzuzeigen, das unter Beibehalten eines vorgebbaren Kraft-Weg-Kennlinienfeldes in einem erweiterten Umgebungstemperaturbereich funktionssicher einsetzbar ist, einen nur geringen Energiebedarf benötigt, bei unterschiedlichen Belastungssituationen nahezu verzögerungsfrei anspricht und kostengünstig realisierbar ist, sowohl hier insbesondere bei niederen Umgebungstemperaturen das Beibehalten des Kennlinienfeldes erlaubt.

Diese Aufgabe wird durch ein System zur automatischen Anpassung einer vorgebbaren Gaseintragsmenge mit den Merkmalen von Anspruch 1 gelöst. Vorteilhafte Ausführungsformen dieses Systems gehen aus den Unteransprüchen 2 bis 10 hervor. Eine Betätigungseinrichtung für eine hydraulisch betätigbare Arbeitsgerätschaft, wie einen an einer Armaufnahme vorzugsweise schwenkbar gelagerten Lasthebearm, mit mindestens einem Aktuator zum Bewegen der Arbeitsgerätschaft und mit mindestens einem solchen Rekuperator-System geht aus Anspruch 11 hervor, der gleichfalls die vorstehend genannten Aufgabenstellungen löst.

Erfindungsgemäß ist zur Lösung dieser Aufgabenstellungen ein System zur automatischen Anpassung einer vorgebbaren Gaseintragsmenge in einem Arbeitssystem mit relativ zueinander bewegbaren Systemkomponenten aufgezeigt, bei denen im Betrieb durch Kompression oder Expansion und/oder bei sich ändernden Betriebs- und Umgebungstemperaturen der Druck der Gaseintragsmenge veränderbar ist, wobei ein Speichersystem mit einem vorgebbaren Speichervolumen über eine Steuereinrichtung derart an das Arbeitssystem anschließbar ist, dass im Fall einer Kompression innerhalb des Arbeitssystems ein Teil der Gaseintragsmenge an das Speichersystem als Speichermenge abgebbar ist und im Fall einer Expansion innerhalb des Arbeitssystems von dem Speichersystem abrufbar als Gaseintragsmenge dem Arbeitssystem wieder zuführbar ist, insbesondere zum Ausgleich von Veränderungen der Temperatur im Arbeitssystem und/oder in dessen Umgebung dient. Das System ist dadurch gekennzeichnet, dass die in einer gasführenden Verbindung zwischen dem Arbeitssystem und dem Speichersystem angeordnete Steuereinrichtung zwei Ventileinheiten in Parallelanordnung zueinander aufweist, dass mit der einen Ventileinheit die Expansion und mit der anderen Ventileinheit die Kompression des Arbeitsgases innerhalb des Arbeitssystems beeinflussbar ist, dass die eine Ventileinheit ein Druckminderventil ist und dass die andere Ventileinheit ein Druckbegrenzungsventil ist.

Das eine Druckbegrenzungsventil ermöglicht es, bei hohen Drücken (Kompression) im Arbeitssystem die für den Erhalt des vorgebbaren Kennlinienfeldes überschüssige Gaseintragsmenge an das Speichersystem abzugeben. Das Druckminder- oder Druckregelventil hingegen, das in der entgegengesetzten Richtung wirkt, öffnet sich, sobald sich im Arbeitssystem ein Druck (Expansion) einstellt, der unter einem vorgegebenen Mindestdruck liegt. Dieses Ventil schließt sich wieder, sobald der Druck im Arbeitssystem über dem jeweils vorgegebenen Mindestdruck liegt. Diese Einzelvorgänge finden fortlaufend und zeitnah statt, so dass eine ständige Anpassung der Gaseintragssituation zur Konstanthaltung des Kraft-Weg-Kennlinienfeldes in der Rekuperatoreinrichtung unter Einbezug der jeweiligen Relativstellung der Systemkomponenten des Arbeitssystems stattfindet.

Durch das erfindungsgemäße System kann bei hohen Drücken im Arbeitssystem (Rekuperator) eine Entlastung in Richtung des an den Rekuperator angeschlossenen Speichersystems geschaffen werden. Entsprechend besteht bei zu geringen Drücken im Arbeitssystem die Möglichkeit, bevorratetes Gas aus dem Speichersystem wiederum umgekehrt mittels der Steuereinrichtung gezielt und portioniert in das Arbeitssystem einzuspeisen. Das Arbeitsgas in dem System verhält sich hierbei gemäß den Gesetzen für reale Gase und ist insbesondere vom Druck, dem zur Verfügung stehenden Volumen und der Temperatur im Arbeitssystem abhängig. Jedenfalls lässt sich mit der erfindungsgemäßen Lösung das vorgebbare Kraft-Weg-Kennlinienfeld für den Energierückgewinnungszylinder oder Rekuperator als Arbeitssystem beibehalten, und zwar unabhängig von der jeweils herrschenden Umgebungstemperatur und der jeweils herrschenden Arbeits- oder Betriebstemperatur des Arbeitsgases.

Durch das erfindungsgemäße System wird eine vorteilhafte Möglichkeit bereitgestellt, den Druck im Arbeitssystem an das vorgebbare gewünschte Kraft-Weg-Kennlinienfeld anzupassen. Damit kann ein- und dasselbe System in einem erweiterten Umgebungstemperaturbereich (Nord-Süd-Länder) eingesetzt werden. Des Weiteren wird die Temperatur des Gases im Arbeitssystem durch Bewegungen der Systemkomponenten, insbesondere durch häufige Kompressionen der jeweils vorhandenen Gaseintragsmenge, erhöht, wodurch sich im Arbeitssystem sogar ein derartig hoher Druck aufbauen kann, dass eventuell keine weitere Kompression mehr möglich ist. Dem soll durch Abgeben von mittels der Steuereinrichtung genau portionierbaren Teilmengen der Gesamt-Gaseintragsmenge von dem Arbeitssystem kommend an das Speichersystem gleichfalls abgeholfen werden. Kommt es danach beispielsweise zu einem starken Abfall der Umgebungstemperatur oder zu einer längeren Ruhephase des Arbeitssystems, kann der Druck im Arbeitssystem unter eine kritische Grenze fallen, bei der das Arbeitssystem nicht mehr in der Lage ist, seine Funktion zur wieder abrufbaren Zwischenspeicherung von potentieller Energie zu erfüllen. In diesem Fall ist es erforderlich, die Gaseintragsmenge im Arbeitssystem zu erhöhen, was mit der vorgeschlagenen Lösung ebenfalls möglich ist, indem nunmehr, wiederum portioniert, also in genau definierbaren Mengen Gas von dem Speichersystem in das Arbeitssystem (Rekuperator) mittels der Steuereinrichtung rückgeführt wird. Die vorstehenden Ausführungen machen deutlich, dass die Konstanz der umgebungstemperaturabhängigen p-V- bzw. Kraft-Weg(Hub)-Kennlinien des Arbeitssystems sich in einem schmalen Temperaturbereich bewegen, der von der Gasdruckseite her anzusteuern ist, um die Kennlinie(n) konstant zu halten.

Darüber hinaus ist die Anpassung der Gaseintragsmenge mittels der in gegenläufigen Zumess-Richtungen wirkenden Steuereinrichtung unmittelbar, d.h. ohne wesentlichen zeitlichen Verzug, möglich und bewirkt eine schnelle Anpassung der jeweiligen Gasein- und -austragsmengen an die Temperatur. Das System ist zudem energieeffizient, weil die aufwendigen Wärmetauschereinheiten sowie Heiz- und Kühleinrichtungen des Standes der Technik vermieden sind. Da das erfindungsgemäße System mit wenig Komponenten auskommt, ist es insoweit auch kostengünstig realisierbar.

Vorzugsweise ist das als Rekuperator ausgebildete Arbeitssystem aus mindestens einem Speicherzylinder gebildet, dessen Kolben-Stangen-Einheit als eine erste Systemkomponente in einem Zylindergehäuse als einer weiteren Systemkomponente für eine Relativbewegung zueinander längsverfahrbar geführt ist, wobei die Kolben-Stangen-Einheit zumindest teilweise einzelne Gasräume innerhalb des Zylindergehäuses voneinander separiert.

Weiter bevorzugt ist im Kolben der Kolben-Stangen-Einheit mindestens ein Durchlass vorhanden, der in Abhängigkeit von der Verfahrstellung der Kolben-Stangen-Einheit zwei (Teil-)Gasräume mit veränderbaren Volumina miteinander gasführend verbindet. Die Stange der Kolben-Stangen-Einheit weist vorzugsweise eine Hohlkammer auf, die mit mindestens einem der Gasräume innerhalb des Zylindergehäuses permanent gasführend verbunden ist. Aufgrund des Durchlasses ergibt sich eine vorteilhafte Verbindung der Gasräume innerhalb des Arbeitssystems miteinander im Sinne der Bildung eines gemeinsamen Gesamt-Gasraumes. Das Volumen dieses Gesamt-Gasraumes des Arbeitssystems ist dadurch vorteilhaft erhöht. Insbesondere steht ein größeres Eintragsvolumen zur Verfügung, welches als Mengenausgleich bei den Kompressions- und Expansionsvorgängen genutzt werden kann. Der jeweilige Durchlass erlaubt auch eine Androsselung der Verfahrbewegung der Kolben-Stangen-Einheit in beide Richtungen, was einen ruck- und störungsfreien Betrieb ermöglicht.

In vorteilhafter Weise ist das Speichersystem aus mindestens einem Gasspeicher gebildet, dessen Speichervolumen vorzugsweise kleiner oder gleich dem Volumen der (Teil-)Gasräume des Arbeitssystems in dessen vollständig expandiertem Zustand ist. Auf diese Weise ist sichergestellt, dass einerseits ein Großteil der Gaseintragsmenge des als Rekuperator oder Energierückgewinnungszylinder dienenden Arbeitssystems an das als Kompensatoreinrichtung dienende Speichersystem abgebbar ist und dass auf der anderen Seite aber auch eine Übertragung der Speichermenge zurück in das Arbeitssystem aufgrund des im Speichersystem vorherrschenden Drucks möglich ist, und zwar für jede mögliche einnehmbare Arbeitsstellung des Arbeitssystems in Abhängigkeit von der Temperatursituation.

Zumindest einer der Gasspeicher des Speichersystems ist vorzugsweise als ein Druckspeicher mit einem darin angeordneten Trennelement ausgebildet. Diese konstruktiv einfache Ausführungsform eines Gasspeichers ist besonders kostengünstig herstellbar und leicht aufbauend, so dass zu einer etwaigen Bewegung des Gasspeichers mittels der Arbeitsgerätschaft der Arbeitsmaschine wenig Energie aufgewendet werden muss.

Vorteilhaft ist dabei zumindest ein Gasspeicher des Speichersystems mit einer thermischen Isolierung versehen. Durch die thermische Isolierung wird zum einen der thermische Energieverlust der Speichermenge verringert und zum anderen ist sichergestellt, dass sich ändernde Umgebungstemperaturen nicht nachteilig auf den Gesamt-Energiehaushalt (Drücke p) von Rekuperator und angeschlossenem Kompensator auswirken können.

Besonders bevorzugt ist jedoch alternativ oder zusätzlich gemäß der Lehre der DE 10 2011 116 517A1 im Innern des Speichers ein Füllmaterial einzubringen, beispielsweise in Form eines Schaumes, der nicht nur das Speichervermögen erhöhen kann, sondern auch der thermischen Isolation dient.

Vorteilhaft ist zumindest eine der beiden Ventileinheiten aus einem steuerbaren Ventil, beispielsweise in Form eines elektronisch ansteuerbaren Mehrwegeventils, gebildet, das von einer Steuer- und Kontrolleinheit ansteuerbar ist, die vorzugsweise über Sensoren erfassbare Eingangsgrößen überwacht, wie Systemdrücke, Gasvolumina, System- sowie Umgebungstemperaturen. Auf diese Weise kann das Verhalten des Systems auch direkt gesteuert werden. Eine aktive Beeinflussung des Systems ist somit möglich und erlaubt es, beispielsweise bei Lastspitzen zu deren Kompensation zusätzliche Energie vom Speichersystem in das Arbeitssystem zu übertragen.

In einer bevorzugten Ausführungsform ist die Steuereinheit in einem Boden des in Form eines hydraulischen Arbeitszylinders konzipierten Arbeitssystems integriert. Dies hat den Vorteil, dass eventuelle Leckagen an den Ventilen im Gaszylinder verbleiben und so keine Gasverluste in die Umgebung auftreten.

Die jeweilige Erfindung (System/Betätigungseinrichtung) ist nachfolgend anhand eines in den Figuren dargestellten, jeweils zuordenbaren Ausführungsbeispiels näher erläutert. Es zeigen:
- Fig. 1: in prinzipieller Darstellung ein erfindungsgemäßes System zur automatischen Anpassung einer vorgebbaren Gaseintragsmenge;
- Fig. 2: eine Betätigungseinrichtung für eine hydraulisch betätigbare Arbeitsgerätschaft unter Einbezug eines Systems nach der Fig. 1;
- Fig. 3: die Betätigungseinrichtung nach der Fig. 2 für den Einsatz bei einem gegenüber einer Armaufnahme schwenkbar gelagerten Lasthebearm als Teil einer hydraulisch betätigbaren Arbeitsgerätschaft; und
- Fig. 4: in prinzipieller Darstellung eine weitere Ausführungsform eines Systems, vergleichbar der Darstellung nach der Fig. 2.

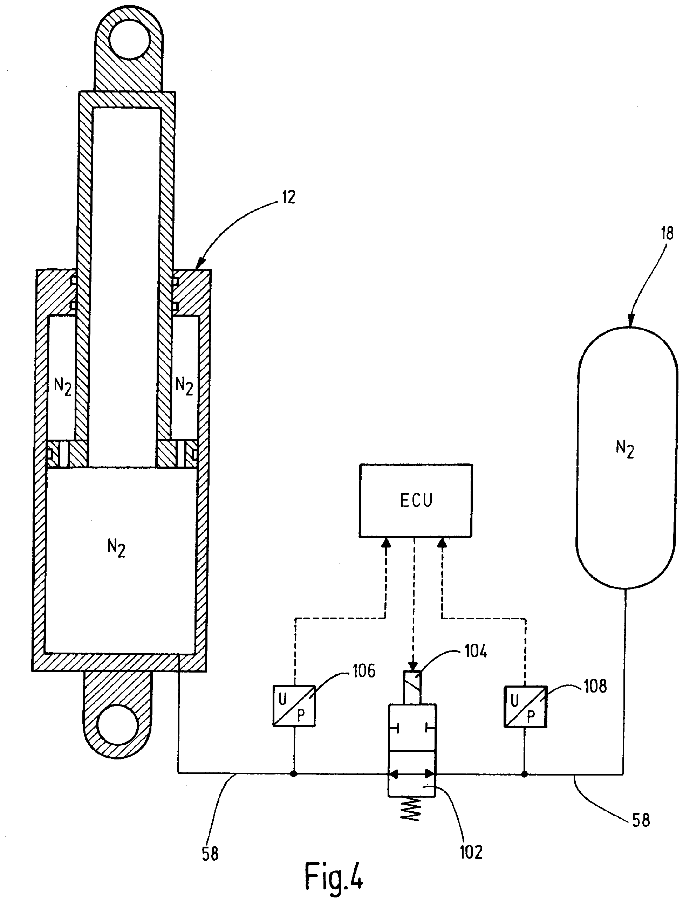

Die Ausführungsform der Fig. 4 dient lediglich der Erläuterung des Hintergrundes der Erfindung und ist nicht Gegenstand eines Anspruches.

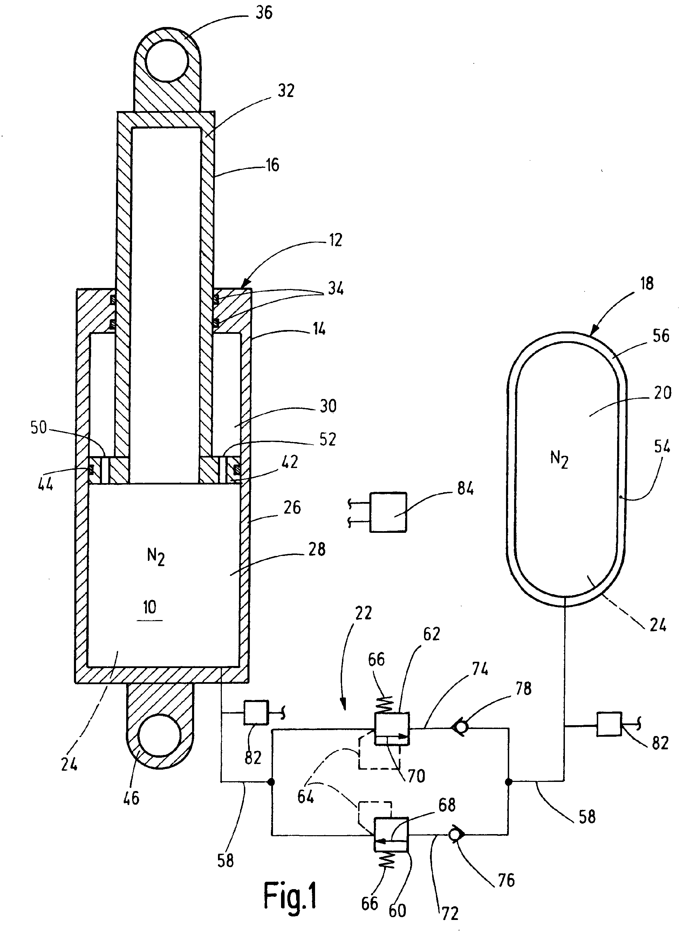

In der Fig. 1 ist als Ganzes ein System zur automatischen Anpassung einer vorgebbaren Gaseintragsmenge 10, insbesondere bestehend aus Stickstoffgas (N2), in einem Arbeitssystem 12 mit einzelnen Systemkomponenten 14, 16 gezeigt. Bei den zueinander lageveränderlich angeordneten Systemkomponenten 14, 16 ist im Betrieb durch Kompression oder Expansion und/ oder bei sich ändernden Betriebs- und Umgebungstemperaturen der jeweilige Druck der Gaseintragsmenge 10 verändert, was sich nachteilig auf die jeweils vorgebbare(n) Kraft-Weg-Kennlinie(n) der Gaseintragsmenge 10 im Arbeitssystem 12 auswirkt. Um die vorgebbare(n) Kraft-Weg-Kennlinie(n) respektive das Kennlinienfeld des Arbeitssystems 12 beizubehalten, sieht die erfindungsgemäße Lösung ein Speichersystem 18 vor mit einem vorgebbaren Speichervolumen 20 für die Aufnahme von Gas, insbesondere in Form von Stickstoffgas (N2), wobei das genannte Speichersystem 18 derart über eine Steuereinrichtung 22 an das Arbeitssystem 12 anschließbar ist, dass im Fall einer Kompression des Inhalts der gasführenden Kammern oder (Teil-)Gasräume 28, 30 innerhalb des Arbeitssystems 12 ein Teil der Gaseintragsmenge 10 an das Speichersystem 18 als portionierbare Speichermenge 24 abgebbar ist und im Fall einer gegenläufig wirkenden Expansion innerhalb des Arbeitssystems 12 ein Teil des Gas- oder Speichervolumens 20 von dem Speichersystem 18 kommend wieder abrufbar als Speichermenge 24 und somit als erneute Gaseintragsmenge 10 dem Arbeitssystem 12 zuführbar ist, was insbesondere den System-Ausgleich von Veränderungen der Temperatur im Arbeitssystem und/oder seiner Umgebung ermöglicht.

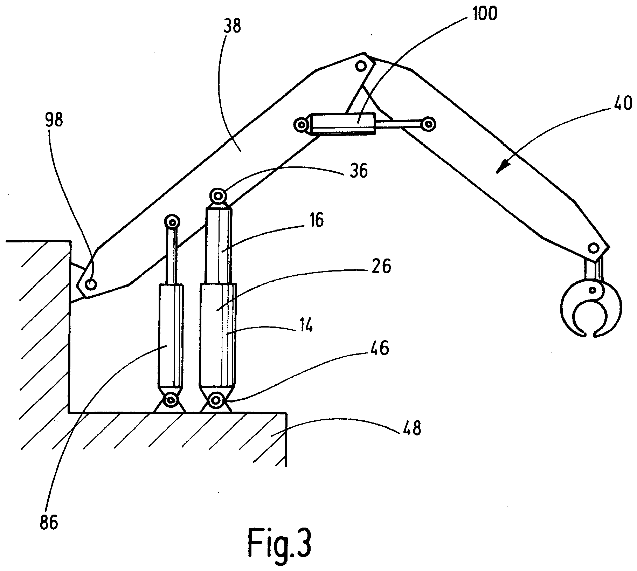

Wie die Fig. 1 weiter zeigt, weist das Arbeitssystem 12 mindestens einen konventionellen Steuer- oder Speicherzylinder 26 auf, dessen Kolben-Stangen-Einheit 16 als die erste Systemkomponente in einem Zylindergehäuse 14 als der weiteren Systemkomponente für eine Relativbewegung dieser Komponenten zueinander längsverfahrbar geführt ist. Die Kolben-Stangen-Einheit 16 unterteilt innerhalb des Zylindergehäuses 14 einen ersten (Teil-)Gasraum 28 von einem weiteren zweiten (Teil-)Gasraum 30. Je nach Verfahrstellung der Kolben-Stangen-Einheit 16 innerhalb des Zylindergehäuses 14 verändern sich die Volumina der beiden (Teil-)Gasräume 28, 30 zueinander. Die Kolben-Stangen-Einheit 16 weist als Zylinderstange einen Hohlkolben 32 auf, der einen Teil des ersten Gasraums 28 umfasst. Der Hohlkolben 32 ist über eine Dichtungs- und Führungsanordnung 34 innerhalb einer stirnseitigen Gehäusewand des Zylindergehäuses 14 längsverfahrbar geführt. An seinem einen freien Ende weist der Hohlkolben 32 ein Lagerauge 36 auf, mit dem er mit Drittbauteilen, wie einem Lasthebearm 38 einer Arbeitsgerätschaft 40 (Fig. 3), verbindbar ist. An seinem anderen freien Ende weist der Hohlkolben 32 einen Kolben 42 auf, der über ein außenumfangsseitig angeordnetes Dicht- und Führungssystem 44 in üblicher und daher nicht näher beschriebener Art und Weise auf der Innenseite des Zylindergehäuses 14 längsverfahrbar zusammen mit dem Hohlkolben 32 geführt ist. Dem ersten Lagerauge 36 gegenüberliegend ist ein weiteres zweites Lagerauge 46 auf der Bodenseite des Zylindergehäuses 14 angeordnet, das wiederum der Anlenkung des Arbeitssystems 12, insbesondere in Form des Speicherzylinders 26, an einer Armaufnahme 48 der Arbeitsgerätschaft 40 für den Lasthebearm 38 dient. Der Speicherzylinder 26 dient insoweit als Rekuperator für die Energierückgewinnung, was im Folgenden noch näher erläutert werden wird.

Im Kolben 42 ist ein Durchlass 50 vorhanden, der die beiden (Teil-)Gasräume 28 und 30 permanent medienführend miteinander verbindet und der aus einzelnen Bohrungen 52 besteht, die sich in konzentrischer Weise um die Längsachse des Speicherzylinders 26 herum im Kolben 42 erstrecken. Insoweit ist an sich im Speicherzylinder 26 nur ein Gesamt-Gas-Arbeitsraum aus den beiden Teilräumen 28 und 30 gebildet, der sehr großvolumig ausfällt. Alternativ kann an den Teilraum 30 zur Erhöhung des Speichervermögens auf der Gasseite mindestens ein weiterer externer Gasspeicher (nicht dargestellt) angeschlossen sein.

Wie die Fig. 1 des Weiteren zeigt, weist das Speichersystem 18 einen das Speichervolumen 20 definierenden Gasspeicher 54 in der Art eines Windkessels auf, d.h. innerhalb des Speichergehäuses des Gasspeichers 54 ist kein vorspannbares Trennelement vorgesehen, so dass der Gasspeicher 54 ausschließlich der Aufnahme von einzelnen Speichermengen 24 eines vorgebbaren Speichervolumens 20 dient. Bei der Inbetriebnahme wird der Gaszylinder 26 und das Speichervolumen 20 mit dem gleichen Gasdruck po vorgespannt. Dafür können verschiedene Drücke gewählt werden. Ein möglicher Ansatz ist beispielsweise, dass sofern die Arbeitsmaschine zwischen -20 °C und 60 °C arbeiten soll, ein po für 20 °C ermittelt wird. Dieser Wert wird dann etwas reduziert, da der Füllvorgang bei ausgefahrenem Gaszylinder 26 erfolgt, was das maximale Volumen darstellt. Weiterhin wird für die Ermittlung des po die Last und Kinematik des Arbeitsgerätes berücksichtigt, so dass sich das Arbeitsgerät von allein senkt. Die Randbedingungen für die Auslegung des po sind mithin nicht fest, so könnte auch ein Betreiber z.B. ein höheres po wählen. Dieser müsste dann die Zylinder aktiv herunterdrücken, was zur Folge hätte, dass er auf der anderen Seite wiederum mehr Unterstützung beim Heben erfährt. Für eine thermische Isolierung ist der Gasspeicher 54 außenumfangsseitig mit einer Isolierung 56 versehen, beispielsweise in Form eines aufgebrachten Isolierschaums. Er kann zusätzlich oder alternativ auch eine im Speicherinnern eingesetzte Isolierung, bspw. in Form eines Isolierschaumes aufweisen.

Die in einer gasführenden Verbindung 58 zwischen dem Arbeitssystem 12 und dem Speichersystem 18 angeordnete Steuereinrichtung 22 weist zwei Ventileinheiten 60, 62 in Parallelanordnung zueinander auf, wobei mit der einen Ventileinheit 60 die Expansion und mit der anderen Ventileinheit 62 die Kompression des Arbeitsgases innerhalb der (Teil-)Gasräume 28, 30 des Arbeitssystems 12 beeinflussbar ist. Vorzugsweise ist dabei die eine Ventileinheit 60 ein Druckminder- oder Druckregelventil, wohingegen die andere Ventileinheit 62 bevorzugt ein Druckbegrenzungsventil ist. Obwohl beide Ventileinheiten 60, 62, die im Wesentlichen vom Schaltsymbol her gleich aussehend dargestellt sind, ihren Ansteuerdruck über die jeweilige Ansteuerleitung 64 vonseiten des Arbeitssystems 12 erhalten und im Übrigen über eine jeweilige Druckfeder 66 in ihre Ausgangsstellung rückstellbar sind, ergibt sich das besondere angesprochene Ventilverhalten durch die gezeigte Richtung der jeweiligen Durchflusspfeile, wobei der Durchflusspfeil 68 der ersten Ventileinheit 60 in Richtung des Arbeitssystems 12 weist, wohingegen der Durchflusspfeil 70 des weiteren Ventils oder der weiteren Ventileinheit 62 in Richtung des Speichersystems 18 gerichtet ist.

Für die Parallelanordnung der beiden genannten Ventileinheiten 60, 62, geht die gasführende Verbindungsleitung 58 in zwei parallele Teilzweige 72, 74 über, die jeweils ein Rückschlagventil 76, 78 zwischen der Ventileinheit 60 bzw. 62 und dem Speichersystem 18 aufweisen, deren jeweilige Öffnungsrichtung einmal in Richtung der ersten Ventileinheit 60 weist bzw. von der zweiten Ventileinheit 62 weg in Richtung des Speichersystems 18. Dergestalt wird ein unerwünschter Rückfluss vom Arbeitssystem 12 in Richtung des Speichersystems 18 über das erste Rückschlagventil 76 verhindert bzw. ein unerwünschter Rückfluss vom Speichersystem 18 zum Arbeitssystem 12 über das zweite Rückschlagventil 78.

Das Speichersystem 18 kann gemäß der dargestellten Ausführungsform nach der Fig. 1 einen Gasspeicher 54 ohne Trennelement und ohne Vorspannung aufweisen; es wäre jedoch auch denkbar, hier einen üblichen Hydrospeicher zu verwenden, dessen nicht dargestelltes Trennelement zwei Medienseiten voneinander trennt, wobei in dem insoweit abgetrennten Medienvorratsraum bevorzugt ein Vorspanngas mit einem vorgebbaren Speicherdruck bevorratet sein kann, beispielsweise in Form eines entsprechend vorgespannten Stickstoffgases. In einer vereinfachten Ausgestaltung könnte anstelle des Stickstoffspeichers 20 auch eine übliche Vorratsflasche mit Stickstoffgas treten. In weiterer Vereinfachung dieser Lösung wäre es auch denkbar, als Speichersystem 18 ein übliches sog. Druckluftnetz einzusetzen, das vorzugsweise Stickstoffgas führt und das bei Arbeitsmaschinen jedweder Art häufig bereits vorhanden ist. In einer bevorzugten Weiterausgestaltung der erfindungsgemäßen Lösung können Sensoren 82 üblicher Bauart verwendet werden, die beispielsweise in die gasführende Leitung 58 eingesetzt sowohl aufseiten des Arbeitssystems 12 als auch aufseiten des Speichersystems 18 Grund- oder Eingangsgrößen überwachen können, wie Systemdrücke, Gasvolumina, System- sowie Umgebungstemperaturen, aber auch zur Überwachung von Durchflussgeschwindigkeiten und etwaigen Partikelverschmutzungen mit eingesetzt werden können. Die dahingehenden Sensoren 82 liefern die erfassten Messwerte an eine zentrale Steuer- und Kontrolleinheit 84 (CPU), die in der Fig. 1 als sogenannte Black-Box dargestellt ist und die zur Ansteuerung des System-Gesamtprozesses mit herangezogen werden kann.

Anstelle der gezeigten Ventileinheiten 60 und 62 in Form eines Druckminder- oder Druckregelventils bzw. eines Druckbegrenzungsventils können auch andere Ventile treten, beispielsweise in Form von elektronisch ansteuerbaren Schalt- oder sonstigen Mehrwegeventilen, die in Abhängigkeit von den über die Sensoren 82 erfassten Messwerten dann von der zentralen Steuer- und Kontrolleinheit 84 anzusteuern sind. Bei einer derartigen Ausgestaltung, insbesondere unter Einsatz eines entsprechend konzipierten Mehrwegeventils (nicht dargestellt), können dann die beiden Teilzweige 72, 74 auch in einer gemeinsamen Einfachleitung zusammengefasst werden.

So zeigt die Variante nach der Fig. 4 ein 2/2-Wegeventil 102 auf, wobei gemäß der Darstellung nach der Fig. 4 das Ventil in der stromlos offenen Bauweise gezeichnet ist. Es besteht aber auch die Möglichkeit 2/2-Wegeventile in stromlos geschlossener Bauweise (nicht dargestellt) einzusetzen. Das 2/2-Wegeventil wird in üblicher Weise über eine Druckfeder in der stromlos offenen Stellung gehalten und ist mit einer elektronischen Regelung (ECU) versehen, die über eine übliche Schaltbetätigungseinrichtung 104 das Ventil 102 ansteuern kann. Eingangsseitig ist die elektronische Regelung ECU an zwei Drucksensoren 106, 108 angeschlossen, die einmal den Druck zwischen Arbeitssystem 12 und dem Wegeventil 102 erfassen bzw. den Druck zwischen diesem Wegeventil 102 und dem Speichersystem 18. Die elektronische Regelung ECU ist dann in der Lage, in Abhängigkeit von der jeweiligen Drucksituation zwischen Arbeitssystem 12 und Speichersystem 18 das Ventil 102 derart anzusteuern, dass die vorstehend beschriebenen und nachfolgend noch näher erläuterten Ausgleichs- und Speichervorgänge vonstattengehen können. Insbesondere lassen sich sehr zielgerichtet und zeitnah in kurzer Aufeinanderfolge, also quasi impulsförmig die angesprochenen Ausgleichs- und Speichervorgänge realisieren.

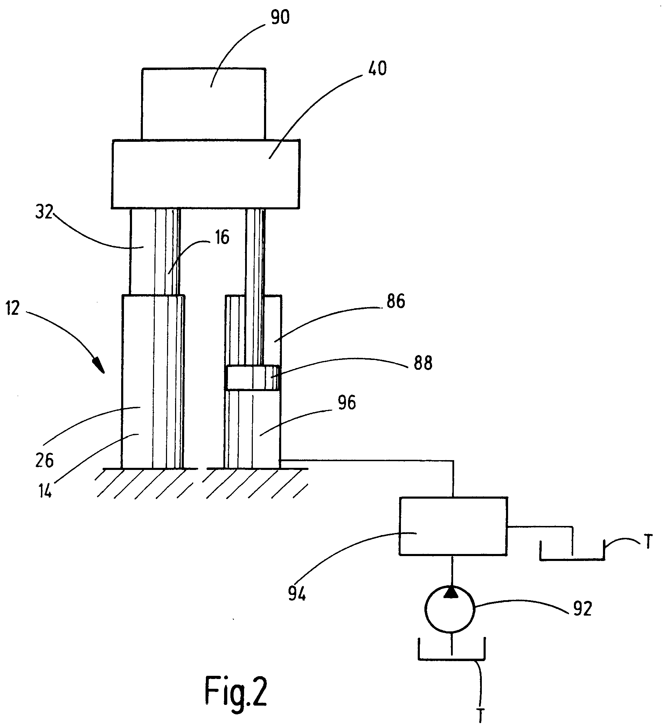

Im Folgenden wird nunmehr die Funktion des automatischen Anpassungssystems anhand des Einsatzes bei Betätigungseinrichtungen näher beschrieben. Dabei ist in den Fig. 2 und 3 in prinzipieller Darstellung jeweils eine Betätigungseinrichtung für eine hydraulisch betätigbare Arbeitsgerätschaft gezeigt.

Für die jeweilige Betätigungseinrichtung findet dabei das in Fig. 1 dargestellte System Anwendung, wobei der einfacheren Darstellung wegen in den Fig. 2 und 3 als Rekuperatoreinrichtung nur das Arbeitssystem 12 gezeigt ist ohne das zugehörige Speichersystem 18 nebst Steuereinrichtung 22. Als eigentlicher Kraftantrieb zum Betätigen der jeweiligen Arbeitsgerätschaft 40 dient in üblicher Weise ein hydraulisch betätigbarer Arbeitszylinder 86, der fachsprachlich in diesem Zusammenhang auch als Aktuator bezeichnet wird. Anstelle des einzeln gezeigten Arbeitszylinders 86 kann eine Vielzahl solcher Arbeitszylinder (nicht dargestellt) bei einer Arbeitsmaschine oder Arbeitsgerätschaft je nach Leistungsbedarf eingesetzt sein; aber auch andere Formen von Aktuatoren, wie beispielsweise elektrohydraulische Antriebe, Linearantriebe, Spindeltriebe etc. können Verwendung finden. Bei den gezeigten Ausführungsbeispielen nach den Fig. 2 und 3 findet aber, wie genannt, der einfacheren Erläuterung wegen ein hydraulisch betätigbarer Arbeitszylinder 86 ausschließlich Verwendung, dessen Kolben-Stangen-Einheit 88 zum Anheben und Absenken einer Lastmasse 90 dient, die gemäß dem Ausführungsbeispiel nach der Fig. 2 Bestandteil eines Scherenhubtisches, einer Aufzuganlage oder einer sonstigen Lastbetätigungseinrichtung, wie beispielsweise einer Gabelstapleranordnung, sein kann. Für das dahingehende An- und Absenken der Lastmasse 90 einer hydraulischen Betätigungseinrichtung 40 ist der Arbeitszylinder oder Aktuator 86 in üblicher und daher nicht näher beschriebener Weise an eine hydraulische Versorgungseinrichtung 92, beispielsweise in Form einer Hydropumpe, angeschlossen sowie an eine Ventileinheit 94, die zum Anheben der Kolben-Stangen-Einheit 88 Hydraulikflüssigkeit unter Pumpendruck der Versorgungseinrichtung 92 auf die Kolbenseite 96 des Arbeitszylinders 86 weiterleitet bzw. für einen Absenkvorgang dahingehende Fluidmengen von der Kolbenseite 96 auf die Tankseite T zurückführt, aus der die Hydropumpe im Betrieb fördert.

Parallel zu diesem Aktuator 86 ist das als Rekuperator dienende Speicher- oder Arbeitssystem 12 innerhalb der Betätigungseinrichtung angeordnet. Fährt der Aktuator oder Arbeitszylinder 86 ein, wird auch der Speicherzylinder 26 eingefahren mit der Folge, dass das im Speicherzylinder 26 bevorratete Arbeitsgas, also die Gaseintragsmenge 10, verdichtet oder komprimiert wird. Dergestalt findet durch die Abwärtsbewegung der Lastmasse 90 ein Energieeintrag in das Arbeitssystem 12 innerhalb des Speicherzylinders 26 statt. Die derart im Speicherzylinder 26 "abgelegte" Kompressionsenergie kann dann wiederum abgerufen werden zur Unterstützung des Arbeitszylinders oder Aktuators 86, sobald dieser von der Ventileinheit 94 angesteuert die Lastmasse 90 aus der abgesenkten Position wieder anhebt. Insoweit entspricht die Lösung nach der Fig. 2 den bekannten Aktuator- und Rekuperator-Lösungen, wie sie im Stand der Technik und beispielhaft in der DE 10 2010 032 415 A1 aufgezeigt sind.

Kommt es nun zu einer Änderung der Umgebungstemperatur, ändert sich der Druck der Gaseintragsmenge 10 im Speicherzylinder 26, was auch der Fall ist, wenn durch eine entsprechende Anzahl von Expansions- und Kompressionsvorgängen zum An- und Absenken der Lastmasse 90 die Systemkomponenten 14 und 16 des Speicherzylinders 26 relativ zueinander verfahren und dabei die Gaseintragsmenge 10 eine Temperaturänderung erfährt. Insbesondere ist bei Kompressionsvorgängen unter Last eine Temperaturerhöhung betreffend die Gaseintragsmenge 10 zu erwarten und bei Expansionsvorgängen kommt es zu einer entsprechenden Abkühlung des Arbeitsgases. Letztendlich führen diese Temperaturänderungen zu einer Veränderung des für das Arbeitssystem 12 in Form des Speicherzylinders 26 vorgegebenen Kraft-Weg-Kennlinienfeldes, das auch unter dem Begriff "Kraft-Hub-Kennlinien" geführt ist und letztendlich die umgebungstemperaturabhängigen Werte p-V-Werte mit erfasst.

Um diese Kennlinien oder das Kennlinienfeld nach Möglichkeit weitgehend konstant zu halten, wird in Abhängigkeit des jeweiligen Systemzustandes des Arbeitssystems 12 das Speichersystem 18 über die Steuereinrichtung 22 sinnfällig zugeschaltet. Kommt es beispielsweise temperaturbedingt innerhalb der Gaseintragsmenge 10 des Speicherzylinders 26 zu einer Erwärmung derselben, ist dies einem Kompressionsvorgang für den Speicherzylinder 26 gleichzusetzen und die zweite Ventileinheit 62 wird dann derart über den Differenzdruck automatisch betätigt, dass die damit einhergehende überschüssige Gaseintragsmenge 10 in Richtung des Gasspeichers 54 des Speichersystems 18 ausgeschoben wird, was insoweit die Speichermenge 24 auf der Speichersystemseite 18 erhöht. Vorzugsweise öffnet dabei die Ventileinheit 62, wenn der Druck im Speicherzylinder 26 über einen vorgebbaren Druck-Maximalwert ansteigt, beispielsweise einen Wert von maximal 350 bar übersteigt. Insbesondere ist das Erreichen dieses oberen Maximal-Druckes im Gas- oder Speicherzylinder 26 zu erwarten, wenn hohe Temperaturen in der Umgebung und/oder im Speicherinneren vorliegen und der Hohlkolben 32 kurz vor Anschlag in der eingefahrenen unteren Zylinderposition ist.

Bei niedrigen Temperaturen hingegen und ausfahrendem Zylinder oder Hohlkolben 32, insbesondere kurz vor seiner oberen Anschlagstellung, liegt eine Art Expansionszustand für den Speicherzylinder 26 vor und die Ventileinheit 60 wird automatisch angesteuert, da dann ein vorgebbarer Mindestdruck im Gas- oder Speicherzylinder 26 unterschritten ist. Im dahingehenden Fall wird zur Konstanthaltung des Kraft-Weg-Kennlinienfeldes die fehlende Gaseintragsmenge 10 in Form der benötigten Speichermenge 24 über das Speichervolumen 20 des Gasspeichers 54 ausgeglichen. Durch das vorstehend beschriebene Rekuperator-System mit Speicherausgleich passt sich also die Gaseintragsmenge 10 im Gas- oder Speicherzylinder 26 bei geänderten Temperaturen gegenüber einer Grundtemperatur, für die das Kennlinienfeld errechnet wurde, in vorgebbaren Grenzen stets automatisch an, so dass in einem engen Band die Energiespeichereigenschaften des Rekuperatorsystems temperaturunabhängig gewährleistet sind.

Es ist es für einen Durchschnittsfachmann überraschend, dass er zu den dahingehenden Ergebnissen kommt, obwohl das Speichervolumen 20 des Gasspeichers 54 wesentlich geringer ist gegenüber der Gaseintragsmenge 10 im Speicherzylinder 26. Voraussetzung für eine systemkonforme Betätigung ist jedoch, dass in einer Grundtemperaturausrichtung sowohl die Gaseintragsmenge 10 als auch die Speichermenge innerhalb des Speichervolumens 20 im Gasspeicher 54 aufeinander abgestimmt sind. Im vorstehend bezeichneten Ausführungsbeispiel haben sich darüber hinaus gute Anpassungswerte ergeben, wenn sich für die erste Ventileinheit 60 ein einstellbarer Mindestdruck von 125 bar ergibt, wobei der Speicherzylinder 26 im ausgefahrenen Zustand gerechnet auf eine Umgebungstemperatur von 20 °C ein Zylindervolumen für die Gaseintragsmenge 10 von etwa 255 I hat und im voll eingefahrenen Zustand von 160 I. Der auf die Umgebungstemperatur von 20 °C und 125 bar ausgelegte Gasspeicher 54 soll dabei Speichervolumen 20 zwischen 50 I und 100 I aufnehmen.

Die Ausführungsform einer Betätigungseinrichtung nach der Fig. 3 wird nur noch insofern erläutert, als sie sich wesentlich von der vorangegangenen Ausführungsform nach der Fig. 2 unterscheidet. Der Aktuator 86 ist auch bei der Ausführungsform nach der Fig. 3 parallel zu dem als Rekuperator dienenden Speicherzylinder 26 angeordnet. Durch Betätigen des Aktuators 86 ist der Lasthebearm 38 um eine Gelenkstelle 98 schwenkbar an der Armaufnahme 48 gelagert. Der Lasthebearm 38 ist bei dem Ausführungsbeispiel nach der Fig. 2 zweiteilig ausgebildet, wobei die beiden Teile über eine weitere Aktuatoreinrichtung 100 schwenkbar zueinander angeordnet sind, und der weitere Teil des Lasthebearmes 38 trägt an seinem freien Ende in üblicher und daher nicht mehr näher beschriebener Weise einen Greifer. Obwohl der Aktuator 86 und der Rekuperator 12, 26 an unterschiedlichen Stellen am Lasthebearm 38 angreifen, ist die vorstehend beschriebene Funktionsweise für das Aktuator- und Rekuperatorsystem für die Arbeitsgerätschaft 40 nach der Fig. 3 ebenso einschlägig, wie dies für die Ausführungsform nach der Fig. 2 vorstehend beschrieben wurde.

Abschließend sei noch darauf hingewiesen, dass bei einem energielosen Zustand für das Arbeitssystem 12 bedingt durch die Druckfeder 66 der Durchflusspfeil 68 der ersten Ventileinheit 60 eine gemeinsame Verbindungslinie bildet (nicht dargestellt) mit dem Teilzweig 72 zwischen der zuordenbaren Ansteuerleitung 64 und dem Rückschlagventil 76. Die Darstellung der ersten Ventileinheit 62, wie in Fig. 1 angegeben, ist hingegen für diesen Grundzustand zutreffend.

## Patentansprüche

1. System zur automatischen Anpassung einer vorgebbaren Gaseintragsmenge (10) in einem Arbeitssystem (12) mit relativ zueinander bewegbaren Systemkomponenten (14, 16), bei denen im Betrieb durch Kompression oder Expansion und/oder bei sich ändernden Betriebs- und Umgebungstemperaturen der Druck der Gaseintragsmenge (10) veränderbar ist, wobei ein Speichersystem (18) mit einem vorgebbaren Speichervolumen (20) über eine Steuereinrichtung (22) derart an das Arbeitssystem (12) anschließbar ist, dass im Fall einer Kompression innerhalb des Arbeitssystems (12) ein Teil der Gaseintragsmenge (10) an das Speichersystem (18) als Speichermenge (24) abgebbar ist und im Fall einer Expansion innerhalb des Arbeitssystems (12) von dem Speichersystem (18) abrufbar als Gaseintragsmenge (10) dem Arbeitssystem (12) wieder zuführbar ist, insbesondere zum Ausgleich von Veränderungen der Temperatur im Arbeitssystem (12) und/oder in dessen Umgebung dient, **dadurch gekennzeichnet, dass** die in einer gasführenden Verbindung (58) zwischen dem Arbeitssystem (12) und dem Speichersystem (18) angeordnete Steuereinrichtung (22) zwei Ventileinheiten (60, 62) in Parallelanordnung zueinander aufweist, dass mit der einen Ventileinheit (60) die Expansion und mit der anderen Ventileinheit (62) die Kompression des Arbeitsgases innerhalb des Arbeitssystems (12) beeinflussbar ist, dass die eine Ventileinheit (60) ein Druckminderventil ist und dass die andere Ventileinheit (62) ein Druckbegrenzungsventil ist.

2. System nach Anspruch 1, **dadurch gekennzeichnet, dass** das Arbeitssystem (12) aus mindestens einem Speicherzylinder (26) gebildet ist, dessen Kolben-Stangen-Einheit (16) als die erste Systemkomponente in einem Zylindergehäuse (14) als der weiteren Systemkomponente längsverfahrbar geführt ist, wobei die Kolben-Stangen-Einheit (16) zumindest teilweise einzelne (Teil-)Gasräume (28, 30) innerhalb des Zylindergehäuses (14) voneinander separiert.

3. System nach Anspruch 2, **dadurch gekennzeichnet, dass** im Kolben (42) der Kolben-Stangen-Einheit (16) mindestens ein Durchlass (50) vorhanden ist, der in Abhängigkeit von der Verfahrstellung der Kolben-Stangen-Einheit (16) zwei Gasräume (28, 30) mit veränderbaren Volumina miteinander gasführend verbindet, und dass vorzugsweise die Stange (32) der Kolben-Stangen-Einheit (16) eine Hohlkammer aufweist, die mit mindestens einem der Gasräume (30) innerhalb des Zylindergehäuses (14) permanent gasführend verbunden ist.

4. System nach einem der vorhergehenden Ansprüche, **dadurch gekennzeichnet, dass** das Speichersystem (18) aus mindestens einem Gasspeicher (54) gebildet ist, dessen Speichervolumen (20) vorzugsweise kleiner oder gleich dem Volumen der (Teil-)Gasräume (28, 30) des Arbeitssystems (12) in dessen vollständig expandiertem Zustand ist.

5. System nach Anspruch 4, **dadurch gekennzeichnet, dass** zumindest einer der Gasspeicher (54) des Speichersystems (18) als ein Druckspeicher mit einem darin angeordneten Trennelement ausgebildet ist.

6. System nach Anspruch 4 oder 5, **dadurch gekennzeichnet, dass** zumindest ein Gasspeicher (54) des Speichersystems (18) innen und/ oder außen mit einer thermischen Isolierung (56) versehen ist.

7. System nach einem der vorgehenden Ansprüche, **dadurch gekennzeichnet, dass** zumindest eine der beiden Ventileinheiten (60, 62) aus einem steuerbaren Ventil, beispielsweise in Form eines elektronisch ansteuerbaren Mehrwegeventils, gebildet ist, das von einer Steuer- und Kontrolleinheit (84) ansteuerbar ist, die vorzugsweise über Sensoren (82) erfassbare Eingangsgrößen überwacht, wie Systemdrücke, Gasvolumina, System- sowie Umgebungstemperaturen.

8. Betätigungseinrichtung für eine hydraulisch betätigbare Arbeitsgerätschaft (40), wie einen an einer Armaufnahme (48) vorzugsweise schwenkbar gelagerten Lasthebearm (38), mit mindestens einem Aktuator (86, 100) zum Bewegen der Arbeitsgerätschaft (40) und mindestens einem als Rekuperatoreinrichtung (12) dienenden System nach einem der vorhergehenden Ansprüche.

## Claims

1. System for the automatic adjustment of a predefinable gas input quantity (10) in a working system (12) having system components (14, 16) which are movable relative to each other, in which system components the pressure of the gas input quantity (10) is variable due to compression or expansion during operation and/or under changing operating and ambient temperatures, wherein an accumulator system (18) with a predefinable storage volume (20) can be connected to the working system (12) via a control device (22) in such a manner that, in the case of compression within the working system (12), a portion of the gas input quantity (10) can be delivered to the accumulator system (18) as a storage quantity (24) and, in the case of expansion within the working system (12), can be retrieved from the accumulator system (18) and fed back to the working system (12) as a gas input quantity (10), in particular to compensate for changes of temperature in the working system (12) and/or its surroundings, **characterised in that** the control device (22) arranged in a gas-conducting connection (58) between the working system (12) and the accumulator system (18) has two valve units (60, 62) in parallel arrangement to each other, **in that** the expansion of the working gas within the working system (12) can be influenced with the one valve unit (60) and the compression of the same with the other valve unit (62), **in that** the one valve unit (60) is a pressure-reducing valve and **in that** the other valve unit (62) is a pressure-limiting valve.

2. System according to claim 1, **characterised in that** the working system (12) is composed of at least one storage cylinder (26), the piston-rod unit (16) of which, as the first system component, is guided so as to be longitudinally movable in a cylinder housing (14) as the further system component,
wherein the piston-rod unit (16) at least partially separates individual (partial) gas chambers (28, 30) from each other within the cylinder housing (14).

3. System according to claim 2, **characterised in that** at least one passage (50) is present in the piston (42) of the piston-rod unit (16), which passage connects two gas chambers (28, 30) with variable volumes to each other in a gas-conducting manner as a function of the travel position of the piston-rod unit (16), and **in that** the rod (32) of the piston-rod unit (16) preferably has a hollow chamber which is permanently connected to at least one of the gas chambers (30) within the cylinder housing (14) in a gas-conducting manner.

4. System according to one of the preceding claims, **characterised in that** the accumulator system (18) is composed of at least one gas tank (54), the storage volume (20) of which is preferably smaller than or equal to the volume of the (partial) gas chambers (28, 30) of the working system (12) in its fully expanded state.

5. System according to claim 4, **characterised in that** at least one of the gas tanks (54) of the accumulator system (18) is designed as a pressure accumulator with a separating element arranged therein.

6. System according to claim 4 or 5, **characterised in that** at least one gas tank (54) of the accumulator system (18) is provided internally and/or externally with thermal insulation (56).

7. System according to one of the preceding claims, **characterised in that** at least one of the two valve units (60, 62) are composed of a controllable valve, for example in the form of an electronically controllable multi-way valve, which can be controlled by a control and monitoring unit (84), which monitors input variables, such as system pressures, gas volumes, system and ambient temperatures, which can preferably be detected via sensors (82).

8. Operating device for hydraulically operable equipment (40), such as a load lifting arm (38) preferably pivotably mounted on an arm support (48), having at least one actuator (86, 100) for moving the equipment (40) and at least one system according to one of the preceding claims serving as a recuperator device (12).

## Revendications

1. Système d'adaptation automatique d'une quantité (10) de charge de gaz pouvant être donnée à l'avance dans un système (12) de travail ayant des composants (14, 16) du système mobiles l'un par rapport à l'autre, dans lequel, en fonctionnement, par compression ou par détente et/ou à des températures de fonctionnement et ambiantes qui varient, la pression de la quantité (10) de charge de gaz peut être modifiée, un système (18) d'accumulation, à volume (20) d'accumulation pouvant être donné à l'avance, pouvant, par l'intermédiaire d'un dispositif (22) de commande, être raccordé au système (12) de travail, de manière à ce que, dans le cas d'une compression à l'intérieur du système (12) de travail, une partie de la quantité (10) de charge de gaz puisse être cédée comme quantité (24) d'accumulation au système (18) d'accumulation et, dans le cas d'une détente à l'intérieur du système (12) de travail, puisse être retournée au système (12) de travail comme quantité (10) de charge de gaz pouvant être appelée du système (18) d'accumulation, en servant notamment à compenser des variations de la température dans le système (12) de travail et/ou dans ce qui l'entoure, **caractérisé en ce que** le dispositif (22) de commande, monté dans une liaison (58) de conduite de gaz entre le système (12) de travail et le système (18) d'accumulation, a deux unités (60, 62) de soupape suivant un agencement en parallèle l'une avec l'autre, **en ce que**, par l'une (60) des unités de soupape, la détente, et par l'autre unité (62) de soupape, la compression du gaz de travail à l'intérieur du système (12) de travail peut être influencée **en ce que** l'une des unités (6) de soupape est un détendeur et **en ce que** l'autre unité (62) de soupape est une soupape de limitation de la pression.

2. Système suivant la revendication 1, **caractérisé en ce que** le système (12) de travail est formé d'au moins un cylindre (26) d'accumulation, dont l'unité (16) piston-tige, comme premier composant du système, est guidée avec possibilité de se déplacer longitudinalement dans une enveloppe (14) cylindrique, comme l'autre composant du système, l'unité (16) piston-tige séparant, au moins en partie, divers espaces (28, 30) partiels pour du gaz à l'intérieur de l'enveloppe (14) cylindrique.

3. Système suivant la revendication 2, **caractérisé en ce qu'**il y a, dans le piston (42) de l'unité (16) piston-tige, au moins un passage (50), qui, en fonction de la position de déplacement de l'unité (16) piston-tige, met en communication de conduite de gaz entre eux deux espaces (28, 30) pour du gaz de volume variable et **en ce que**, de préférence, la tige (32) de l'unité (16) piston-tige a une chambre creuse, qui communique en conduite de gaz de manière permanente avec au moins l'un des espaces (30) pour du gaz à l'intérieur de l'enveloppe (14) cylindrique.

4. Système suivant l'une des revendications précédentes, **caractérisé en ce que** le système (18) d'accumulation est formé d'au moins un accumulateur (54) de gaz, dont le volume (20) est de préférence inférieur ou égal au volume des espaces (28, 30) partiels pour du gaz du système (12) de travail dans son état détendu complètement.

5. Système suivant la revendication 4, **caractérisé en ce qu'**au moins l'un des accumulateurs (54) de gaz du système (18) d'accumulation est constitué en accumulateur de pression ayant un élément de séparation, qui y est disposé.

6. Système suivant la revendication 4 ou 5, **caractérisé en ce qu'**au moins un accumulateur (54) de gaz du système (18) d'accumulation est pourvu à l'intérieur et/ou à l'extérieur d'une isolation (56) thermique.

7. Système suivant l'une des revendications précédentes, **caractérisé en ce qu'**au moins l'une des deux unités (60, 62) de soupape est formée d'une soupape pouvant être commandée, par exemple, sous la forme d'une soupape à plusieurs voies pouvant être commandée électroniquement, qui peut être commandée par une unité (84) de commande et de contrôle, qui contrôle des grandeurs d'entrée pouvant être détectées de préférence par des capteurs (82), comme des pressions du système, des volumes de gaz, des températures du système ou de ce qui l'entoure.

8. Dispositif d'actionnement d'un appareillage (40) de travail à actionnement hydraulique, comme un bras (38) de levage de charge monté, de préférence, pivotant sur une réception (48) de bras, comprenant au moins un actionneur (86, 100) pour déplacer l'appareillage (40) de travail et au moins un système suivant l'une des revendications précédentes, servant de dispositif (12) récupérateur.
